# EUROPEAN PATENT APPLICATION

(11) **EP 3 907 910 A1**
(43) Date of publication of application: **10.11.2021**
(21) Application number: 19907396.6
(22) Date of filing: 03.12.2019
(51) Int. Cl.: H04L 1/00

(54) **PROCESSING METHOD AND DEVICE**

(30) Priority: 04.01.2019 CN 201910009378
(71) Applicant: VIVO MOBILE COMMUNICATION CO., LTD., Dongguan, Guangdong 523860 (CN)
(72) Inventor: SHEN, Xiaodong, Dongguan, Guangdong 523860 (CN); PAN, Xueming, Dongguan, Guangdong 523860 (CN); LU, Zhi, Dongguan, Guangdong 523860 (CN); LI, Na, Dongguan, Guangdong 523860 (CN)
(74) Representative: Conti, Marco
(86) International application number: PCT/CN2019/122663
(87) International publication number: WO 2020/140669

(57) **Abstract**

Embodiments of this disclosure provide a processing method and a device. The method includes: receiving signaling; determining uplink transmission related information based on the signaling, where the signaling includes one or more of the following: DCI format related information, identifier related information, control channel configuration related information, service priority related information, resource indication related information, and an MCS table corresponding to DCI.

## Description

### CROSS-REFERENCE TO RELATED APPLICATIONS

This application claims priority to Chinese Patent Application No. 201910009378.0, filed in China on January 4, 2019, which is incorporated herein by reference in its entirety.

### TECHNICAL FIELD

Embodiments of this disclosure relate to the field of communication technologies, and specifically, to a processing method and a device.

### BACKGROUND

Compared with mobile communications systems in the related art, fifth-generation mobile communication technology (Fifth-generation mobile communication technology, 5G) systems need to adapt to more diverse scenarios and service requirements. Main scenarios in 5G include: enhanced mobile broadband (Enhanced Mobile Broadband, eMBB), ultra reliable & low latency communication (Ultra Reliable & Low Latency Communication, URLLC), and massive machine type communication (massive Machine Type Communication, mMTC). These scenarios pose requirements such as high reliability, low latency, large bandwidth, and wide coverage on the systems.

However, in the related art, different services may correspond to a same uplink transmission procedure. As a result, different quality of service (Quality of Service, QoS) requirements of the different services cannot be met.

### SUMMARY

One objective of embodiments of this disclosure is to provide a processing method and a device, so as to resolve the problem that different QoS requirements of different services cannot be met.

According to a first aspect of the embodiments of this disclosure, a processing method is provided. The method includes:
receiving signaling; and
determining uplink transmission related information based on the signaling, where
the signaling includes one or more of the following: downlink control information DCI format related information, identifier related information, control channel configuration related information, service priority related information, resource indication related information, and a modulation and coding scheme MCS table corresponding to DCI.

According to a second aspect of the embodiments of this disclosure, a terminal is further provided, including:
a receiving module, configured to receive signaling; and
a determining module, configured to determine uplink transmission related information based on the signaling, where
the signaling includes one or more of the following: DCI format related information, identifier related information, control channel configuration related information, service priority related information, resource indication related information, and an MCS table corresponding to DCI.

According to a third aspect of the embodiments of this disclosure, a terminal is further provided, including: a processor, a memory, and a program stored in the memory and capable of running on the processor. When the program is executed by the processor, the steps of the processing method according to the first aspect are implemented.

According to a fourth aspect of the embodiments of this disclosure, a computer-readable storage medium is further provided. The computer-readable storage medium stores a computer program, and when the computer program is executed by a processor, the steps of the processing method according to the first aspect are implemented.

In the embodiments of this disclosure, the terminal may determine an uplink transmission procedure based on the received signaling, for example, determining a feedback time related granularity, a feedback time interval, or a time domain granularity of a HARQ-ACK codebook, so as to meet different QoS requirements of different services.

### BRIEF DESCRIPTION OF DRAWINGS

A person of ordinary skill in the art will be clear about other advantages and benefits by reading the following detailed description of optional embodiments. The accompanying drawings are merely intended to illustrate the objectives of the optional embodiments and are not intended to limit this disclosure. Throughout the accompanying drawings, the same reference numerals represent the same components. In the drawings:
FIG. 1 is a schematic architectural diagram of a wireless communications system according to an embodiment of this disclosure;
FIG. 2 is a first flowchart of a processing method according to an embodiment of this disclosure;
FIG. 3 is a second flowchart of a processing method according to an embodiment of this disclosure;
FIG. 4 is a third flowchart of a processing method according to an embodiment of this disclosure;
FIG. 5 is a fourth flowchart of a processing method according to an embodiment of this disclosure;
FIG. 6 is a first schematic diagram of a terminal according to an embodiment of this disclosure; and
FIG. 7 is a second schematic diagram of a terminal according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are merely some rather than all of the embodiments of this disclosure. All other embodiments that a person of ordinary skill in the art obtains without creative efforts based on the embodiments of this disclosure shall fall within the protection scope of this disclosure.

In the specification and claims of this application, the terms "including", and any other variants mean to cover a non-exclusive inclusion. For example, a process, method, system, product, or device that includes a list of steps or units is not necessarily limited to those steps or units, but may include other steps or units not expressly listed or inherent to such a process, method, product, or device. In addition, in the specification and claims, the use of "and/or" represents presence of at least one of the connected objects, for example, "A and/or B" indicates that the following three cases: only A, only B, or both A and B.

In the embodiments of this disclosure, terms such as "an example" or "for example" are used to represent examples, illustrations, or explanations. Any embodiment or design solution described as "exemplary" or "for example" in the embodiments of this disclosure should not be construed as being more preferred or advantageous than other embodiments or design solutions. Specifically, the terms such as "an example" or "for example" are used to present related concepts in a specific manner.

For better understanding of the embodiments of this disclosure, the following technical points are described below first.

### 1. URLLC and eMMB service requirements in new radio (New Radio, NR)

Compared with previous mobile communications systems, 5G systems need to adapt to more diversified scenarios and service requirements. Different services have different QoS requirements. For example, URLLC supports low-latency and high-reliability services. To achieve higher reliability, data needs to be transmitted at a lower code rate, and channel state information (Channel State Information, CSI) needs to be fed back faster and more accurately. The eMBB services meet a high throughput requirement, but are less sensitive to latency and reliability than URLLC. In addition, some terminals may support services of different numerologies (numerology), that is, the terminals not only support low-latency and high-reliability URLLC services, but also support large-capacity and high-rate eMBB services.

### 2. Hybrid automatic repeat request (Hybrid Automatic Repeat reQuest, HARQ) timing

HARQ timing parameters are defined as follows:
(1) K0 is latency between downlink grant (Downlink grant, DL grant) and corresponding DL data (physical downlink shared channel (Physical Downlink Shared Channel, PDSCH)) reception.
(2) K1 is latency between DL (PDSCH) reception and corresponding acknowledgement (ACKnowledgement, ACK) or negative-acknowledgement (Negative-Acknowledgment, NACK) transmission in uplink (Uplink, UL), and a PDSCH-to-HARQ_feedback-timing-indicator field carried in downlink control information (Downlink Control Information, DCI) is used to indicate K1 information.
(3) K2 is latency between UL grant reception in DL and UL data (physical uplink shared channel (Physical Uplink Shared Channel, PUSCH)) transmission.
(4) K3 is latency between acknowledgement (ACKnowledgement, ACK) or negative-acknowledgment (Negative-Acknowledgment, NACK) reception in UL and corresponding data (PDSCH) retransmission in DL.

### 3. Determination of physical uplink control channel (Physical Uplink Control Channel, PUCCH) resources

To determine a PUCCH location in time domain, the following two pieces of location information are required: (1) a relative slot location; and (2) a symbol (symbol) location, so as to determine a location of a corresponding PUCCH resource.

For a slot (slot) used for PUCCH transmission, when a terminal detects DCI format 1_0 (DCI format 1_0) or DCI format 1_1 (indicating DL Grant) including a PDSCH-to-HARQ_feedback-timing-indicator (K1) field, and when the last symbol corresponding to a PDSCH scheduled by the DCI or the last symbol corresponding to the DCI which is a DL semi-persistent scheduling (Semi-Persistent Scheduling, SPS) release (release) command is located in slot n-k, the terminal should transmit HARQ-ACK information over a PUCCH in slot n. Herein, k is the number of slots indicated by the PDSCH-to-HARQ_feedback-timing-indicator field carried in the DCI. A value of the PDSCH-to-HARQ_feedback-timing-indicator field may be obtained from a parameter (DL-data-DL-acknowledgement) configured by higher layer signaling, and DL-data-DL-acknowledgement may be obtained from higher layer signaling (Slot-timing-value-K 1).

### Table 1: Mapping of PDSCH-to-HARQ_feedback timing indicator field values to numbers of slots (Mapping of PDSCH-to-HARQ_feedback timing indicator field values to numbers of slots)

| PDSCH -to-HARQ_feedback timing indicator (PDSCH-to-HARQ feedback timing indicator) | Number of slots k (Number of slots *k*) |
|---|---|
| '000' | 1^{st} value provided by *DL-data-DL-acknowledgement* (1^{st} value provided by *DL-data-DL-acknow ledgement*) |
| '001' | 2^{nd} value provided by *DL-data-DL-acknowledgement* |
| '010' | 3^{rd} value provided by *DL-data-DL-acknowledgement* |
| '011' | 4^{th} value provided by *DL-data-DL-acknowledgement* |
| '100' | 5^{th} value provided by *DL-data-DL-acknowledgement* |
| '101' | 6^{th} value provided by *DL-data-DL-acknowledgement* |
| '110' | 7^{th} value provided by *DL-data-DL-acknowledgement* |
| '111' | 8^{th} value provided by *DL-data-DL-acknowledgement* |

For a symbol used for PUCCH transmission, refer to Table 2, a table of symbol locations of PUCCH resources preconfigured for radio resource control (Radio Resource Control, RRC). In Table 2, a start symbol of PUCCH Format 0 ranges from symbol 0 to symbol 13 of a slot and PUCCH Format 0 occupies 1 or 2 symbols of the slot. A start symbol of PUCCH Format 1 ranges from symbol 0 to symbol 10 of a slot and PUCCH Format 1 occupies 1 or 2 symbols of the slot. A start symbol of PUCCH Format 2 ranges from symbol 0 to symbol 13 of a slot and PUCCH Format 2 occupies 1 or 2 symbols of the slot. A start symbol of PUCCH Format 3 ranges from symbol 0 to symbol 10 of a slot and PUCCH Format 3 occupies 4-14 symbols of the slot. A start symbol of PUCCH Format 4 ranges from symbol 0 to symbol 10 of a slot and PUCCH Format 4 occupies 4-14 symbols of the slot.

**Table 2: PUCCH resource configuration information (partial)**

| | | PUCCH Format 0 | PUCCH Format 1 | PUCCH Format 2 | PUCCH Format 3 | PUCCH Format 4 |
|---|---|---|---|---|---|---|
| Start | Configurability | √ | √ | √ | √ | √ |
| symbol | Value range | 0-13 | 0-10 | 0-13 | 0-10 | 0-10 |
| Number of occupied symbols in a slot | Configurability | √ | √ | √ | √ | √ |
| | Value range | 1,2 | 4-14 | 1,2 | 4-14 | 4-14 |

Generally, one PUCCH resource set is configured for RRC and includes mutiple PUCCH resources. A PUCCH resource indicator (PUCCH Resource Indicator, PRI) field in DCI indicates a PUCCH resource in the PUCCH resource set. After a slot location of a PUCCH resource corresponding to downlink grant is determined, the PUCCH resource in the PUCCH resource set may be determined based on the PRI field in the DCI, and then a symbol location of the PUCCH resource may be determined based on PUCCH resource configuration information.

### 4. Hybrid automatic repeat request acknowledgement (Hybrid Automatic Repeat reQuest ACKnowledgement, HARQ-ACK) codebook (codebook)

For a HARQ-ACK procedure that supports transport block level (TB-level) feedback, each transport block (Transport Block, TB) corresponds to one HARQ-ACK bit (bit), supports multiple DL HARQ processes per terminal, and also supports one DL HARQ process per terminal. The terminal needs to indicate its capability of minimum HARQ processing time (minimum HARQ processing time is minimum time required from downlink data reception to corresponding HARQ-ACK transmission timing). eMBB and URLLC support asynchronous and adaptive downlink HARQ. From the perspective of terminals, HARQ-ACKs for multiple PDSCHs may be transmitted in one UL data/control region in time, and form one HARQ-ACK codebook on this UL. Timing for PDSCH reception and a corresponding ACK/NACK is specified in DCI (see the PDCSCH-to-HARQ timing indicator in DCI 1_0 and DCI 1_1).

The technologies described herein are not limited to 5th-generation mobile communication technology (5th-generation mobile communication technology, 5G) systems, subsequent evolution communications systems, and LTE/LTE advanced (LTE-Advanced, LTE-A) systems, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems.

The terms "system" and "network" are usually used interchangeably. The CDMA system may implement radio technologies such as CDMA2000 and universal terrestrial radio access (Universal Terrestrial Radio Access, UTRA). UTRA includes wideband CDMA (Wideband Code Division Multiple Access, WCDMA) and other CDMA variants. The TDMA system can implement radio technologies such as the global system for mobile communications (Global System for Mobile Communication, GSM). The OFDMA system may implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. UTRA and E-UTRA are both part of the universal mobile telecommunications system (Universal Mobile Telecommunications System, UMTS). LTE and more advanced LTE (such as LTE-A) are new UMTS versions that use E-UTRA. UTRA, E-UTRA, UMTS, LTE, LTE-A, and GSM are described in documents from an organization named "3rd Generation Partnership Project" (3rd Generation Partnership Project, 3GPP). CDMA2000 and UMB are described in documents from an organization named "3rd Generation Partnership Project 2" (3GPP2). The technologies described in this specification may be used for the foregoing systems and radio technologies, and may also be used for other systems and radio technologies.

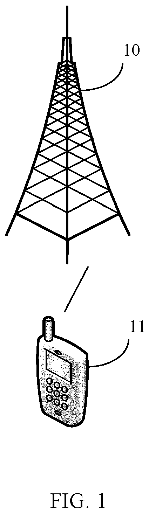

The following describes the embodiments of this disclosure with reference to the accompanying drawings. A processing method and a device provided in the embodiments of this disclosure may be applied to a wireless communications system. FIG. 1 is a schematic architectural diagram of a wireless communications system according to an embodiment of this disclosure. As shown in FIG. 1, the wireless communications system may include: a network device 10 and a terminal. The terminal is denoted as user equipment (User Equipment, UE) 11. The UE 11 may communicate with the network device 10 (for transmission of signaling or data). In practical applications, the connection between the above devices may be a wireless connection. For ease of visually representing the connection relationship between the devices, a solid line is used to indicate that in FIG. 1. It should be noted that the foregoing communications system may include multiple UEs 11, and that the network device 10 may communicate with the multiple UEs 11.

The terminal provided in this embodiment of this disclosure may be a mobile phone, a tablet computer, a notebook computer, an ultra-mobile personal computer (Ultra-mobile Personal Computer, UMPC), a netbook, a personal digital assistant (Personal Digital Assistant, PDA), a mobile internet device (Mobile Internet Device, MID), a wearable device (Wearable Device), a vehicle-mounted device, or the like.

The network device 10 provided in this embodiment of this disclosure may be a base station. The base station may be a commonly used base station or an evolved node base station (evolved node base station, eNB), or may be a network device in a 5G system (for example, a next generation node base station (next generation node base station, gNB) or a transmission and reception point (transmission and reception point, TRP)).

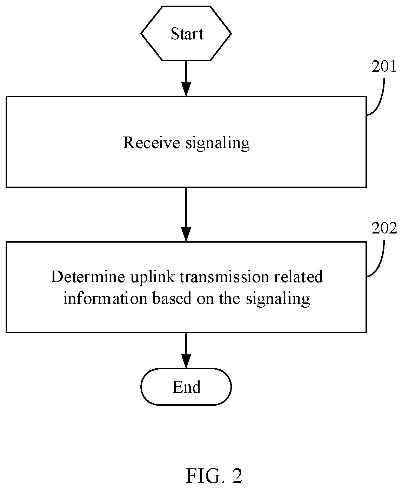

Referring to FIG. 2, an embodiment of this disclosure provides a processing method. The method may be executed by a terminal. Specific steps are as follows:
Step 201: Receive signaling.

For example, the terminal receives signaling from a base station.

Optionally, the signaling may be physical layer signaling or higher layer signaling.

Step 202: Determine uplink transmission related information based on the signaling.

The signaling includes one or more of the following: downlink control information (Downlink Control Information, DCI) format related information, identifier related information, control channel configuration related information, service priority related information, resource indication related information, and a modulation and coding scheme (Modulation and Coding Scheme, MCS) table corresponding to DCI.

Optionally, the DCI format related information may be a DCI format.

Optionally, the identifier related information may include a radio network temporary identity (Radio Network Temporary Identity, RNTI) corresponding to DCI or scrambling information corresponding to DCI.

Optionally, the control channel configuration related information may include a control resource set (Control-Resource SET, CORESET) corresponding to DCI or a search space corresponding to DCI.

Optionally, the service priority related information may include priority indication information in DCI.

Optionally, the resource indication related information may include indication information in DCI, where the indication information is used to indicate a time domain resource and/or a frequency domain resource for data or control information transmission; or the indication information is used to indicate a pilot mapping type for data or control information transmission.

In this embodiment of this disclosure, optionally, the uplink transmission related information includes any one of the following:
a time granularity of an interval between PUCCH feedback occasion and downlink transmission;
a time granularity of an interval between PUSCH feedback occasion and downlink transmission; and
a time granularity of a physical downlink control channel PDCCH to PDSCH interval.

Further, the time granularity of the interval is a slot (slot), a sub-slot (sub-slot), a symbol (symbol), or an integer multiple of a fixed time length.

Optionally, the fixed time length may be configured by a network or prescribed in advance by a protocol.

In this embodiment of this disclosure, optionally, the uplink transmission related information includes an interval between downlink transmission and uplink transmission.

In this embodiment of this disclosure, optionally, the interval between downlink transmission and uplink transmission includes any one of the following:
an interval starting from a boundary of a slot for the downlink transmission to a boundary of a slot for the uplink transmission;
an interval starting from the last symbol for the downlink transmission to the first symbol or the last symbol for the uplink transmission; and
an interval starting from a boundary of a sub-slot for the downlink transmission to a boundary of a sub-slot for the uplink transmission.

It can be understood that the sub-slot is defined as a granularity between a symbol and a slot. For example, when a slot includes 14 symbols, three symbols may be defined as a sub-slot. HARQ-ACK or other uplink transmission information may be fed back based on a size of each sub-slot.

In this embodiment of this disclosure, the terminal may determine an uplink transmission procedure based on the received signaling, so as to meet different QoS requirements of different services.

For example, to meet different service requirements of URLLC services and eMBB services, the terminal may determine an uplink transmission procedure based on the received signaling, so that different services correspond to different uplink transmission procedures, and these uplink transmission procedures ensure physical layer transmission, thereby meeting different QoS requirements of the URLLC and eMBB services.

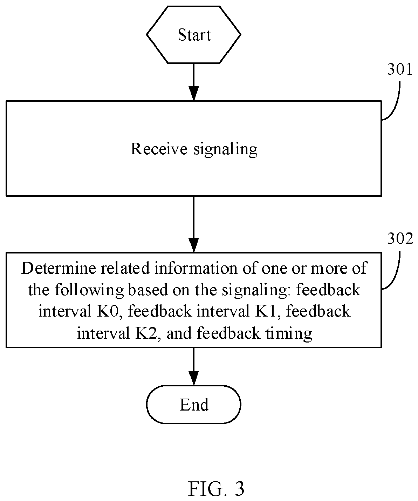

Referring to FIG. 3, an embodiment of this disclosure provides a processing method. The method may be executed by a terminal. Specific steps are as follows:

Step 301: Receive signaling.

For example, the terminal may receive signaling from a base station. Optionally, the signaling may be physical layer signaling or higher layer signaling.

Step 302: Determine related information of one or more of the following based on the signaling: feedback interval K0, feedback interval K1, feedback interval K2, and feedback timing.

The signaling includes one or more of the following: DCI format related information, identifier related information, control channel configuration related information, service priority related information, resource indication related information, and an MCS table corresponding to DCI.

A time granularity of the feedback interval K0, the feedback interval K1, and the feedback interval K2 determined in step 302 may be a slot (slot), a sub-slot (sub-slot), a symbol (symbol), or an integer multiple of a fixed time length. It can be understood that the fixed time length and the integer multiple are not limited in this embodiment of this disclosure. Optionally, the fixed time length may be configured by a network or prescribed in advance by a protocol.
Specifically, (1) the feedback interval K1 is the number of slots, symbols, or sub-slots of an interval between physical uplink control channel (Physical Uplink Control Channel, PUCCH) feedback occasion and downlink transmission (physical downlink control channel (Physical Downlink Control Channel, PDCCH) or physical downlink shared channel (Physical Downlink Shared Channel, PDSCH));
(2) the feedback interval K2 is the number of slots, symbols, or sub-slots of an interval between physical uplink shared channel (Physical Uplink Shared Channel, PUSCH) feedback occasion and downlink transmission (PDCCH or PDSCH); and
(3) the feedback interval K0 is the number of slots, symbols, or sub-slots of an interval between a PDSCH and a PDCCH.

The feedback timing determined in step 302 is a time interval between uplink transmission (PUCCH or PUSCH) and downlink transmission (PDCCH or PDSCH). Details are as follows:
(1) an interval starting from a boundary of a slot for the downlink transmission to a boundary (boundary) of a slot for the uplink transmission;
(2) an interval starting from the last symbol for the downlink transmission to the first symbol or the last symbol for the uplink transmission; and
(3) an interval starting from a boundary of a sub-slot for the downlink transmission to a boundary of a sub-slot for the uplink transmission.

It should be noted that, optionally, the determining feedback interval K1 includes:
(1) a granularity of the feedback interval K1, for example, a slot level (slot level), a sub-slot level (sub-slot level), a symbol level (symbol level), or an integer multiple of a fixed time length, where optionally, the fixed time length may be configured by a network or prescribed in advance by a protocol; and
(2) a timing relationship of the feedback interval K1, for example, relative to slot (relative to slot), relative to sub-slot boundary (relative to sub-slot boundary), or relative to last OFDM symbol of PDSCH (relative to last OFDM symbol of PDSCH).

In this embodiment of this disclosure, the terminal may determine an uplink transmission procedure based on the received signaling, so as to meet different QoS requirements of different services.

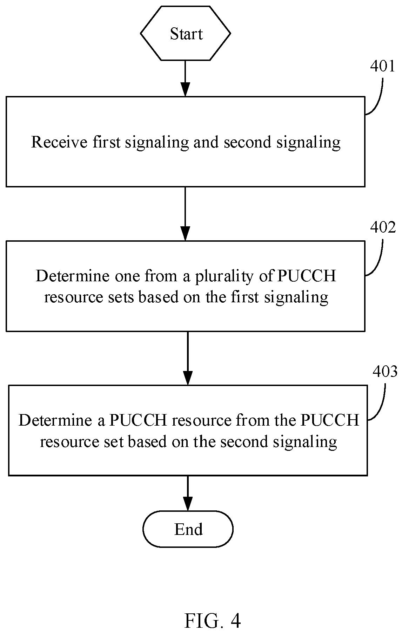

Referring to FIG. 4, an embodiment of this disclosure provides a processing method. The method may be executed by a terminal. Specific steps are as follows:
Step 401: Receive first signaling and second signaling.

For example, the terminal may receive DCI from a base station, where the DCI includes the first signaling and the second signaling; or the terminal may receive first DCI and second DCI, where the first DCI includes the first signaling, and the second DCI includes the second signaling; or the terminal may receive third signaling from a base station, where the third signaling includes the first signaling and the second signaling.

It should be noted that the first signaling and the second signaling may be different signaling, or may be information read from different fields of same DCI, or may be content included in other signaling.
Step 403: Determine one from multiple PUCCH resource sets based on the first signaling.
Step 404: Determine a PUCCH resource from the PUCCH resource set based on the second signaling.

It should be noted that the determined PUCCH resource includes:
(1) multiple PUCCH (Multiple PUCCH) resource configurations and different interpretations mapped to different PUCCH resource configurations, where a PRI indicates a PUCCH resource based on a corresponding PUCCH resource configuration; and
(2) a single PUCCH (Single PUCCH) resource configuration.

In this embodiment of this disclosure, the terminal may determine an uplink transmission procedure based on the received signaling, so as to meet different QoS requirements of different services.

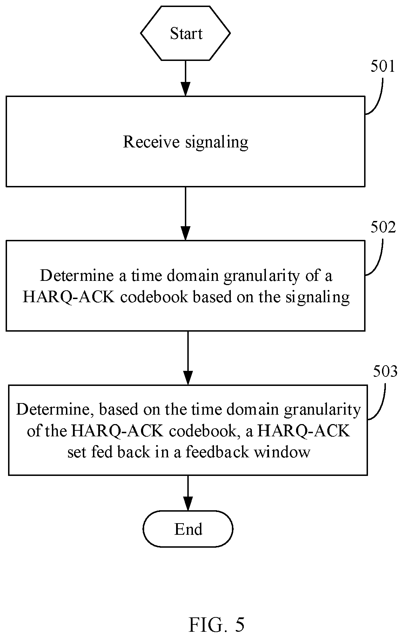

Referring to FIG. 5, an embodiment of this disclosure provides a processing method. The method may be executed by a terminal. Specific steps are as follows:
Step 501: Receive signaling.
   For example, the terminal may receive signaling from a base station. Optionally, the signaling may be physical layer signaling or higher layer signaling.
Step 502: Determine a time domain granularity of a hybrid automatic repeat request acknowledgement (HARQ-ACK) codebook (codebook) based on the signaling.

For example, the time domain granularity of the HARQ-ACK codebook is determined to be a slot, or the time domain granularity of the HARQ-ACK codebook is determined to be a sub-slot, or the time domain granularity of the HARQ-ACK codebook is determined to be a symbol.

Optionally, after step 502, step 503 may be performed.

Step 503: Determine, based on the time domain granularity of the HARQ-ACK codebook, a set of HARQ-ACKs fed back in a feedback window.

It should be noted that the determining a HARQ-ACK codebook includes:
(1) determining the time domain granularity for the HARQ-ACK codebook, for example, sub-slot level (sub-slot level), slot-level (slot-level), symbol-level (symbol-level) (floating time domain window), or an integer multiple of a fixed time length, where optionally, the fixed time length may be configured by a network or prescribed in advance by a protocol; and
(2) semi-statically (semi-static) or dynamically (dynamic) determining the time domain granularity for the HARQ-ACK codebook.

In this embodiment of this disclosure, the terminal may determine an uplink transmission procedure based on the received signaling, so as to meet different QoS requirements of different services.

An embodiment of this disclosure further provides a terminal. Because a problem-resolving principle of the terminal is similar to that of the processing method in the embodiments of this disclosure, for implementation of the terminal, reference may be made to the implementation of the method. Details are not described herein again.

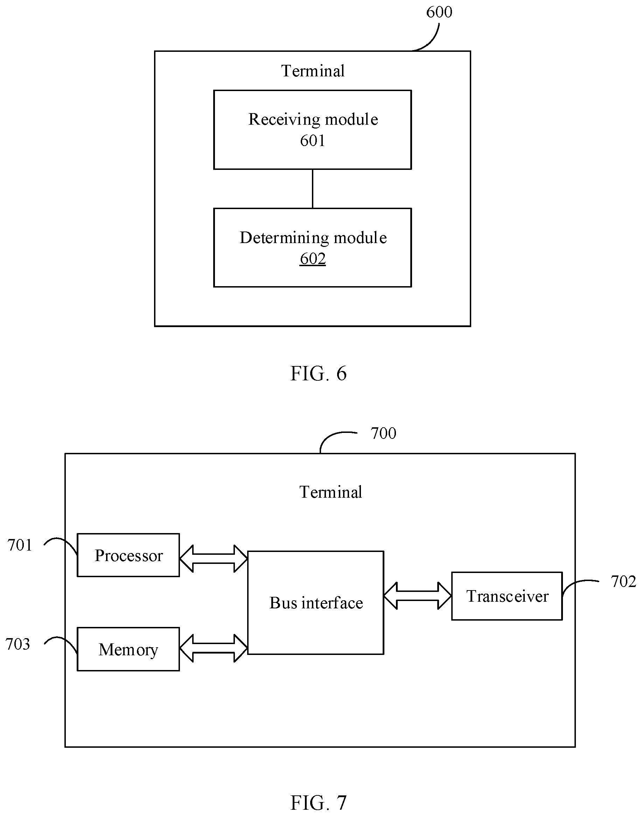

Referring to FIG. 6, an embodiment of this disclosure further provides a terminal. The terminal 600 includes:
a receiving module 601, configured to receive signaling; and
a determining module 602, configured to determine uplink transmission related information based on the signaling, where
the signaling includes one or more of the following: downlink control information DCI format related information, identifier related information, control channel configuration related information, service priority related information, resource indication related information, and a modulation and coding scheme MCS table corresponding to DCI.

Optionally, the uplink transmission related information includes any one of the following:
a time granularity of an interval between PUCCH feedback occasion and downlink transmission;
a time granularity of an interval between PUSCH feedback occasion and downlink transmission; and
a time granularity of a PDCCH to PDSCH interval.

Optionally, the time granularity of the interval is a slot, a sub-slot, a symbol, or an integer multiple of a fixed time length.

Optionally, the uplink transmission related information includes an interval between downlink transmission and uplink transmission.

Optionally, the interval between downlink transmission and uplink transmission includes any one of the following:
an interval starting from a boundary of a slot for the downlink transmission to a boundary of a slot for the uplink transmission;
an interval starting from the last symbol for the downlink transmission to the first symbol or the last symbol for the uplink transmission; and
an interval starting from a boundary of a sub-slot for the downlink transmission to a boundary of a sub-slot for the uplink transmission.

Optionally, the receiving module 601 is further configured to receive first signaling and second signaling.

Optionally, the determining module 602 is further configured to determine one from multiple PUCCH resource sets based on the first signaling; and determine a PUCCH resource from the PUCCH resource set based on the second signaling.

Optionally, the receiving module 601 is further configured to receive DCI, where the DCI includes the first signaling and the second signaling; or receive first DCI and second DCI, where the first DCI includes the first signaling, and the second DCI includes the second signaling; or receive third signaling, where the third signaling includes the first signaling and the second signaling.

Optionally, the determining module 602 is further configured to determine a time domain granularity of a hybrid automatic repeat request acknowledgement HARQ-ACK codebook based on the signaling.

Optionally, the determining module 602 is further configured to determine, based on the time domain granularity of the HARQ-ACK codebook, a set of HARQ-ACKs fed back in a feedback window.

Optionally, the time domain granularity of the HARQ-ACK codebook is any one of the following: a slot, a sub-slot, a symbol, and an integer multiple of a fixed time length. Optionally, the fixed time length may be configured by a network or prescribed in advance by a protocol.

Optionally, the DCI format related information is a DCI format; or
the identifier related information includes an RNTI corresponding to DCI or scrambling information corresponding to DCI; or
the control channel configuration related information includes a CORESET corresponding to DCI or a search space corresponding to DCI; or
the service priority related information includes priority indication information in DCI; or
the resource indication related information includes indication information in DCI, where the indication information is used to indicate a time domain resource and/or a frequency domain resource for data or control information transmission; or the indication information is used to indicate a pilot mapping type for data or control information transmission.

The terminal provided in this embodiment of this disclosure may perform the foregoing method embodiment, with a similar implementation principle and similar technical effects. Details are not described herein again in this embodiment.

FIG. 7 is a structural diagram of a communications device to which an embodiment of this disclosure is applied. As shown in FIG. 7, the communications device 700 includes a processor 701, a transceiver 702, a memory 703, and a bus interface.

In an embodiment of this disclosure, the communications device 700 further includes a program stored in the memory 703 and capable of running on the processor 701. When the program is executed by the processor 701, the following steps are implemented: receiving signaling; and determining uplink transmission related information based on the signaling, where the signaling includes one or more of the following: DCI format related information, identifier related information, control channel configuration related information, service priority related information, resource indication related information, and an MCS table corresponding to DCI.

In FIG. 7, a bus architecture may include any quantity of interconnected buses and bridges, and specifically connect together various circuits of one or more processors represented by the processor 701 and a memory represented by the memory 703. The bus architecture may further interconnect various other circuits such as a peripheral device, a voltage regulator, and a power management circuit. These are all common sense in the art, and therefore are not further described in this specification. The bus interface provides an interface. The transceiver 702 may be multiple elements, including a transmitter and a receiver, and provides units configured to communicate with various other apparatuses over a transmission medium.

The processor 701 is responsible for management of the bus architecture and general processing, and the memory 703 may store data for use by the processor 701 when the processor 701 performs an operation.

The communications device provided in this embodiment of this disclosure may execute the above method embodiment, with a similar implementation principle and similar technical effects. Details are not repeated herein in this embodiment.

Method or algorithm steps described in combination with the content disclosed in this disclosure may be implemented by hardware, or may be implemented by a processor by executing a software instruction. The software instructions may include corresponding software modules. The software modules may be stored in a RAM, a flash memory, a ROM, an EPROM, an EEPROM, a register, a hard disk, a removable hard disk, a CD-ROM, or a storage medium of any other form known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in the foregoing one or more examples, functions described in this disclosure may be implemented by hardware, software, firmware, or any combination thereof. When implemented by software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another place. The storage medium may be any usable medium accessible to a general-purpose or special-purpose computer.

The objectives, technical solutions, and beneficial effects of this disclosure are further described in detail in the foregoing specific implementations. It should be understood that the foregoing descriptions are merely specific implementations of this disclosure, and are not intended to limit the protection scope of this disclosure. Any modification, equivalent replacement, improvement, or the like made based on the technical solutions in this disclosure shall fall within the protection scope of this disclosure.

A person skilled in the art should understand that the embodiments of this disclosure may be provided as a method, a system, or a computer program product. Therefore, the embodiments of this disclosure may be hardware-only embodiments, software-only embodiments, or embodiments with a combination of software and hardware. Moreover, the embodiments of this disclosure may use a form of a computer program product that is implemented on one or more computer-usable storage media (including but not limited to a disk memory, a CD-ROM, an optical memory, and the like) that include computer usable program code.

The embodiments of this disclosure are described with reference to the flowcharts and/or block diagrams of the method, the device (system), and the computer program product according to the embodiments of this disclosure. It should be understood that computer program instructions may be used to implement each process and/or each block in the flowcharts and/or the block diagrams, or a combination of a process and/or a block in the flowcharts and/or the block diagrams. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Apparently, a person skilled in the art may make various changes and variations to the embodiments of this disclosure without departing from the spirit and scope of this disclosure. Therefore, this disclosure is intended to cover the changes and variations provided that the changes and variations of the embodiments of this disclosure fall within the scope of the claims of this disclosure or equivalent technologies thereof.

## Claims

1. A processing method, comprising:
receiving signaling; and
determining uplink transmission related information based on the signaling, wherein
the signaling comprises one or more of the following: downlink control information DCI format related information, identifier related information, control channel configuration related information, service priority related information, resource indication related information, and a modulation and coding scheme MCS table corresponding to DCI.

2. The method according to claim 1, wherein the uplink transmission related information comprises any one of the following:
a time granularity of an interval between physical uplink control channel PUCCH feedback occasion and downlink transmission;
a time granularity of an interval between physical uplink shared channel PUSCH feedback occasion and downlink transmission; and
a time granularity of a physical downlink control channel PDCCH to physical downlink shared channel PDSCH interval.

3. The method according to claim 2, wherein the time granularity of the interval is a slot, a sub-slot, a symbol, or an integer multiple of a fixed time length.

4. The method according to claim 1, wherein the uplink transmission related information comprises an interval between downlink transmission and uplink transmission.

5. The method according to claim 4, wherein the interval between downlink transmission and uplink transmission comprises any one of the following:
an interval starting from a boundary of a slot for the downlink transmission to a boundary of a slot for the uplink transmission;
an interval starting from the last symbol for the downlink transmission to the first symbol or the last symbol for the uplink transmission; and
an interval starting from a boundary of a sub-slot for the downlink transmission to a boundary of a sub-slot for the uplink transmission.

6. The method according to claim 1, wherein the receiving signaling comprises:
receiving first signaling and second signaling.

7. The method according to claim 6, wherein the determining uplink transmission related information based on the signaling comprises:
determining one from multiple PUCCH resource sets based on the first signaling; and
determining a PUCCH resource from the PUCCH resource set based on the second signaling.

8. The method according to claim 6, wherein the receiving first signaling and second signaling comprises any one of the following:
receiving DCI, wherein the DCI comprises the first signaling and the second signaling;
receiving first DCI and second DCI, wherein the first DCI comprises the first signaling, and the second DCI comprises the second signaling; and
receiving third signaling, wherein the third signaling comprises the first signaling and the second signaling.

9. The method according to claim 1, wherein the determining uplink transmission related information based on the signaling comprises:
determining a time domain granularity of a hybrid automatic repeat request acknowledgement HARQ-ACK codebook based on the signaling.

10. The method according to claim 9, wherein after the determining a time domain granularity of a hybrid automatic repeat request acknowledgement HARQ-ACK codebook based on the signaling, the method further comprises:
determining, based on the time domain granularity of the HARQ-ACK codebook, a set of HARQ-ACKs fed back in a feedback window.

11. The method according to claim 9 or 10, wherein the time domain granularity of the HARQ-ACK codebook is any one of the following: a slot, a sub-slot, a symbol, and an integer multiple of a fixed time length.

12. The method according to claim 1, wherein
the DCI format related information is a DCI format; or
the identifier related information comprises a radio network temporary identity RNTI corresponding to DCI and/or scrambling information corresponding to DCI; or
the control channel configuration related information comprises a control resource set CORESET corresponding to DCI and/or a search space corresponding to DCI; or
the service priority related information comprises priority indication information in DCI; or
the resource indication related information comprises indication information in DCI, wherein the indication information is used to indicate a time domain resource and/or a frequency domain resource for data or control information transmission; or the indication information is used to indicate a pilot mapping type for data or control information transmission.

13. A terminal, comprising:
a receiving module, configured to receive signaling; and
a determining module, configured to determine uplink transmission related information based on the signaling, wherein
the signaling comprises one or more of the following: DCI format related information, identifier related information, control channel configuration related information, service priority related information, resource indication related information, and an MCS table corresponding to DCI.

14. A terminal, comprising a processor, a memory, and a program stored in the memory and capable of running on the processor, wherein when the program is executed by the processor, the steps of the processing method according to any one of claims 1 to 12 are implemented.

15. A computer-readable storage medium, wherein the computer-readable storage medium stores a computer program, and when the computer program is executed by a processor, the steps of the processing method according to any one of claims 1 to 12 are implemented.
